# EUROPEAN PATENT APPLICATION

(11) **EP 0 680 052 A1**
(43) Date of publication of application: **02.11.1995**
(21) Application number: 95200964.5
(22) Date of filing: 18.04.1995
(51) Int. Cl.: G21C 3/12, G21C 3/33

(54) **Hold-down apparatus for fuel assemblies**

(30) Priority: 28.04.1994 GB 9408445
(71) Applicant: British Nuclear Fuels PLC, Risley Warrington Cheshire, WA3 6AS (GB)
(72) Inventor: Crabtree, Garry Carlisle, Salwick, Preston PR4 OXJ (GB); Hulme, Christopher Steven, Salwick, Preston PR4 OXJ (GB)
(74) Representative: McCormack, Derek James

(57) **Abstract**

A hold-down apparatus for resiliently locating a fuel assembly (1) in the core of a nuclear reactor is incorporated in the top nozzle (2) of the fuel assembly. The hold-down apparatus comprises a plurality of hold-down devices (7) each of which is located in the top nozzle by a top plate (10) and a bottom adaptor plate (11).
Included in each hold-down device (7) is a guide pin (18) extending upwardly from the adaptor plate (11) and telescopically supporting a plunger (8) at its upper end. The plunger (8), which is urged upwardly by a pair of helical springs (23, 24), extends above the top nozzle (2) for location against the upper core plate of the reactor. Thus, the hold-down devices serve to absorb hydraulic forces resulting from the flow of coolant through the fuel assembly and cater for any expansion of the fuel assembly during operation.

## Description

This invention relates to nuclear fuel assemblies and, in particular, to a hold-down apparatus for resiliently locating a fuel assembly in the core of a nuclear reactor.

In a nuclear reactor of the type employing, for example, light water as the cooling medium, the reactor core comprises a number of fuel assemblies located between upper and lower core plates. Each of the fuel assemblies has a top nozzle assembly which locates against the upper core plate. During operation of the reactor, the top nozzle assembly serves to prevent lifting of an associated fuel assembly caused by the flow forces of the coolant passing upwards through the assembly. Since the fuel assembly is also subject to variations in length, caused by thermal expansion or by the effects of radiation, the top nozzle is resiliently located against the upper core so as to cater for such variations.

It is known to incorporate in the top nozzle assembly a resilient hold-down apparatus comprising a number of axially slidable elements which are biased by springs into engagement with the upper core plate of the reactor. Thus, the spring-loaded elements serve to prevent upward displacement of the fuel assembly as well as absorbing any variation in the length of the fuel assembly. However, previously known hold-down arrangements have proved unsatisfactory in that they are assembled from a relatively large number of components and/or are difficult to install.

It is an object of this invention to provide a hold-down apparatus for a nuclear fuel assembly which overcomes, or at least minimises, the above-mentioned disadvantages.

According to the present invention there is provided a hold-down apparatus for locating a fuel assembly in a nuclear reactor, said apparatus comprising an upper locating means, a bottom plate spaced below said upper locating means and at least one hold-down device, the hold-down device comprising a guide pin having one end fixedly attached to the bottom plate and extending upwardly therefrom towards said upper locating means, a plunger member telescopically mounted on said guide pin and arranged for sliding movement through an opening formed in said upper locating means, said plunger member being provided at a lower end thereof with an enlarged portion located beneath said upper locating means, and spring means acting on said lower end of the plunger member so as to urge the enlarged portion thereof towards or against said upper locating means.

In a preferred embodiment the hold-down apparatus comprises a plurality of said hold-down devices.

The spring means preferably comprises an outer helical spring and an inner helical spring concentrically arranged within the outer spring, said inner and outer helical springs encircling the guide pin in coaxial relationship therewith.

It is preferred that the helix angle of the outer helical spring is inclined in the opposite direction to the helix angle of the inner helical spring.

Advantageously, a recess is formed beneath said enlarged portion of the plunger for receiving one end of said outer spring.

Preferably, a further recess is formed in an upper surface of said bottom plate for receiving the other end of said outer spring and one end of said inner spring.

In a preferred embodiment a counterbore is formed in a lower surface of the bottom plate, the guide pin having an enlarged head portion fixedly secured in said counterbore.

Embodiments of the invention will now be described, by way of example, with reference to the accompanying drawings, in which:
Figure 1 is a perspective sectional view of a fuel assembly incorporating a hold-down apparatus according to the invention.
Figure 2 is a sectional elevation at a larger scale through a top nozzle of the fuel assembly showing components of the hold-down apparatus, and
Figure 3 is a further sectional elevation through the top nozzle shown in Figure 2.

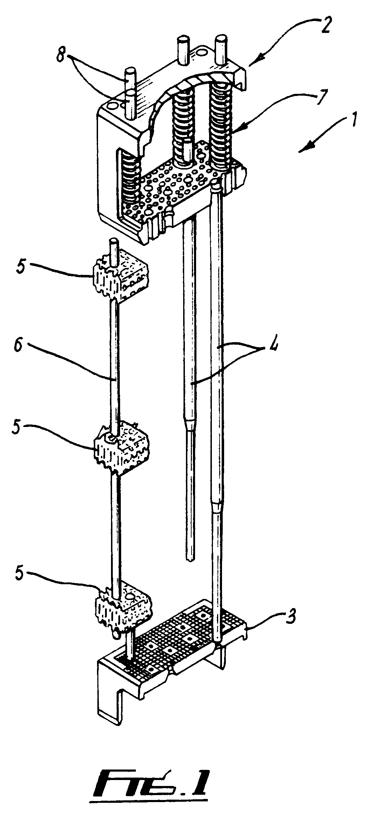

Referring to the drawings, Figure 1 illustrates the main components of a nuclear fuel assembly 1 of the type conventionally used in a pressurised water reactor. The fuel assembly comprises a top nozzle assembly 2 and a bottom nozzle 3 which are interconnected by a number of longitudinally extending control rod guides tubes 4. In use, control rods, not shown, containing neutron absorbing material are moved in and out of the guide tubes 4 so as to control the reactivity, and hence the power level of the reactor. At spaced intervals along the guide tubes 4 and connected thereto are several transverse fuel pin spacer grids 5. Extending through the spacer grids 5 and supported in cells formed therein is an array of fuel pins 6, only one of which is shown in Figure 1.

Incorporated in the top nozzle assembly 2 are eight spring-loaded hold-down devices 7. Although eight is the preferred number of hold-down devices, more or fewer such devices may be used if desired. Preferably, there are two hold-down devices 7 positioned diagonally across each corner of the top nozzle assembly, but it will be apparent that other locations for these devices are possible. Each hold-down device 7 includes a spring-loaded plunger 8 protruding above the upper level of the top nozzle assembly 2. In the reactor a number of fuel assemblies 1 are located between upper and lower core plates to form a reactor core. The bottom nozzle 3 is supported on the lower core plate and the top nozzle assembly 2 is located so that the spring-loaded plungers 8 are urged against the upper core plate. During operation of the reactor, thermally-induced variations in the length of the fuel assemblies are permitted by the spring-loaded hold-down devices 7. In addition, the hold-down devices 7 prevent lifting of the fuel assemblies caused by the flow of coolant passing upwardly through the assemblies.

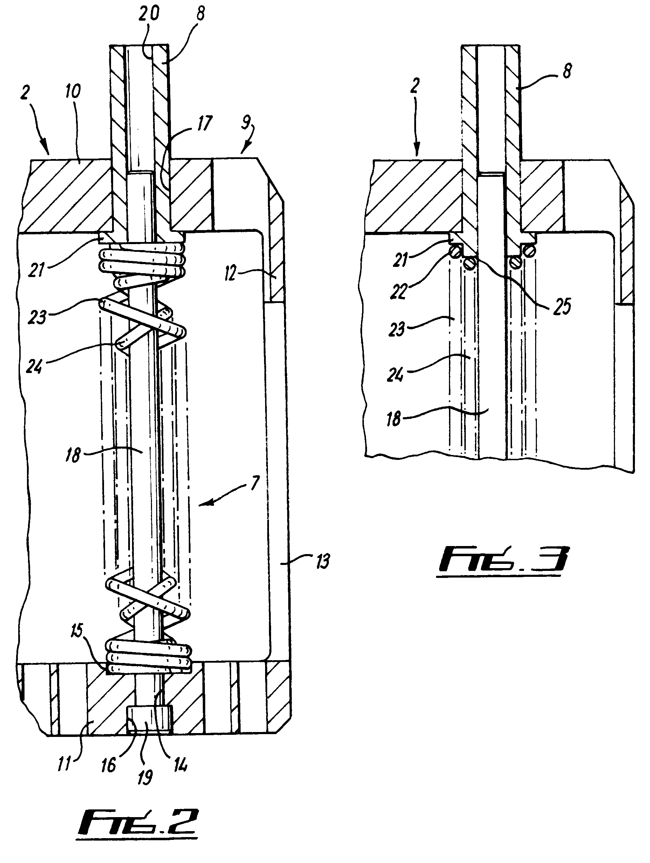

The present invention is concerned with a fuel assembly hold-down apparatus having a construction which facilitates installation, requires relatively few components and which will perform the above-mentioned functions in an efficient manner. The hold-down apparatus, shown in more detail in Figures 2 and 3, comprises a top nozzle assembly 2 which incorporates eight hold-down devices 7. The top nozzle assembly 2 comprises a frame 9 having a top plate 10, a bottom adaptor plate 11 and side walls 12 in which cut-out regions 13 are provided. Bored through the bottom adaptor plate 11 at each location of a hold-down device 7 is a hole 14. The hole 14 is counterbored at the upper and lower surfaces of the bottom adaptor plate 11 to form, respectively, an upper recess 15 and a counterbore 16. A further hole 17, coaxially arranged with respect to the hole 14, is bored through the top plate 10. Extending through the hole 14 and upwardly therefrom is a guide pin 18 which has an increased diameter head 19 wholly located within the counterbore 16. The guide pin 18 is locked in position by tack welding the head 19 in the counterbore 16. Other means for fixing the head in the counterbore are possible, such as, for example, the combination of a dowel and welding or by a screw-threaded connection.

Slidably arranged within the hole 17 is a hollow plunger 8 the upper end of which extends above the upper surface of the top plate 10. The plunger 8 has a central passage 20 which slidably accommodates the upper end of the guide pin 18. At the lower end of the plunger 8, there is an enlarged diameter portion defining a shoulder 21, the upper surface of which locates against the lower surface of the top plate 10. As best seen in Figure 3, a recess 22 is formed beneath the shoulder 21 for receiving the upper end of an outer helical spring 23. An inner helical spring 24, concentrically arranged within the outer spring 23, locates at its upper end against a bottom end surface 25 of the plunger 8. The lower ends of the outer and inner springs 23, 24 are received in the upper recess 15 formed in the lower adaptor plate 11. The helix angle of the outer spring 23 is inclined in the opposite direction to that of the inner spring 24 so as to prevent the possibility of one spring becoming trapped in the other, as could happen if the helix angles were in the same direction.

In the embodiment described above, the plungers 8 are located in a plate forming the top of the top nozzle assembly. However, the plungers 8 could be located and axially constrained within webs or bosses protruding laterally from the side walls 12 of the frame 9 in nozzle assemblies where a top plate is not provided. If desired, the top of the plunger 8 may be covered by a cap.

To install a hold-down device 7 in the top nozzle frame 9, a plunger 8 is inserted upwards through the hole 17 so that the shoulder 21 of the plunger is pushed against the top plate 10. The outer and inner springs 23, 24 are then inserted so that their lower ends are placed in the recess 15 and their upper ends engage, respectively, the shoulder 21 and the bottom end surface 25 of the plunger 8. In this position, the springs are under compression so that they act to press the shoulder 21 against the top plate 10. The guide pin 18 is inserted upwards through the hole 14 in the bottom adaptor plate 11 so that the upper end of the pin passes into the passage 20 of the plunger 8. Finally, the head 19 is tack welded to the counterbore 16 so as to lock the guide pin 18 in position. When the fuel assemblies 1 are installed in the reactor, the upper surfaces of the plungers 8 are in engagement with the upper core plate of the reactor. Thus, hydraulic forces resulting from the flow of coolant through the fuel assembly 1 produce a reaction force on the plungers 8 which is absorbed by the outer and inner springs 23, 24. In addition, any expansion of the fuel assembly during operation will also be absorbed by the springs.

## Claims

1. A hold-down apparatus for locating a fuel assembly (1) in a nuclear reactor, said apparatus comprising an upper locating means (10), a bottom plate (11) spaced below said upper locating means and at least one hold-down device (7), characterised in that the hold-down device (7) comprises a guide pin (18) having one end fixedly attached to the bottom plate (11) and extending upwardly therefrom towards said upper locating means (10), a plunger member (8) telescopically mounted on said guide pin (18) and arranged for sliding movement through an opening (17) formed in said upper locating means (10), said plunger member (8) being provided with an enlarged portion (21) located beneath said upper locating means (10), and spring means (23, 24) acting on said lower end of the plunger member (8) so as to urge the enlarged portion (21) thereof towards or against said upper locating means (10).

2. A hold-down apparatus according to Claim 1, characterised in that the apparatus comprises a plurality of said hold-down devices (7).

3. A hold-down apparatus according to Claim 1 or Claim 2, characterised in that the spring means comprises an outer helical spring (23) and an inner helical spring (24) concentrically arranged within the outer spring, said inner and outer helical springs encircling the guide pin (18) in coaxial relationship therewith.

4. A hold-down apparatus according to Claim 3, characterised in that the helix angle of the outer helical spring (23) is inclined in the opposite direction to the helix angle of the inner helical spring (24).

5. A hold-down apparatus according to Claim 3 or Claim 4, characterised in that a recess (22) is formed beneath said enlarged portion (21) of the plunger (8) for receiving one end of the outer spring (23).

6. A hold-down apparatus according to any one of Claims 3, 4 or 5, characterised in that a further recess (15) is formed in an upper surface of said bottom plate (11) for receiving the other end of said outer spring (23) and one end of said inner spring (24).

7. A hold-down apparatus according to any one of the preceding Claims, characterised in that a counterbore (16) is formed in a lower surface of the bottom plate (11), the guide pin (18) having an enlarged head portion (19) fixedly secured in said counterbore (16).
